# EUROPEAN PATENT APPLICATION

(11) **EP 3 968 693 A1**
(43) Date of publication of application: **16.03.2022**
(21) Application number: 20813993.1
(22) Date of filing: 20.03.2020
(51) Int. Cl.: H04W 36/00

(54) **BEAM TRACKING METHOD AND APPARATUS**

(30) Priority: 31.05.2019 CN 201910471816
(71) Applicant: Huawei Technologies Co., Ltd., Longgang Shenzhen, Guangdong 518129 (CN)
(72) Inventor: HAN, Xiao, Shenzhen, Guangdong 518129 (CN); DENG, Cailian, Chengdu, Sichuan 611756 (CN); GUO, Ziyang, Shenzhen, Guangdong 518129 (CN); LI, Ling, Chengdu, Sichuan 611756 (CN); LONG, Yan, Chengdu, Sichuan 611756 (CN); XIN, Yan, Shenzhen, Guangdong 518129 (CN)
(74) Representative: Maiwald Patent- und Rechtsanwaltsgesellschaft mbH
(86) International application number: PCT/CN2020/080364
(87) International publication number: WO 2020/238354

(57) **Abstract**

This application provides a beam tracking method and apparatus, to reduce a handover delay and improve communications service quality. The method includes: A station STA obtains first information, where the first information includes period information of beam tracking performed by the STA with each of a plurality of access points APs; and the STA performs beam tracking with the plurality of APs based on the first information.

## Description

This application claims priority to Chinese Patent Application No. 201910471816.5, filed with the China National Intellectual Property Administration on May 31, 2019 and entitled "BEAM TRACKING METHOD AND APPARATUS", which is incorporated herein by reference in its entirety.

### TECHNICAL FIELD

Embodiments of this application relate to the field of communications technologies, and in particular, to a beam tracking method and apparatus.

### BACKGROUND

Because movement of a station (station, STA) or its environment changes, a channel changes due to fading and interference, and quality of a link is degraded. The STA needs to hand over its associated access point (access point, AP) to another AP. A conventional handover method mainly includes three steps: scanning, authentication, and re-association. To be specific, once a trigger condition of the handover is met, the STA starts to scan all channels to obtain information of available APs. Usually, after completing the scanning process, the STA selects an AP, with a highest signal-to-noise ratio in all APs, to establish a connection, and then sends a connection request to the AP, to complete a reconnection process. This improves communications quality of a link.

In a personal basic service set control point/access point cluster (BSS PCP/AP cluster) BPAC scenario with a plurality of STAs and a plurality of APs, when communications quality of a link is degraded, a STA needs to perform beam tracking with the plurality of APs. However, when the STA separately performs beam tracking with the plurality of APs, interference is likely caused. In addition, in the conventional technology, a STA performs beam tracking only with an AP currently in communication with the STA. When the AP needs to be handed over, beam tracking needs to be performed before the handover is performed. After a new AP is determined, information exchange authentication needs to be performed between the new AP and the STA, and network communication can be performed only after the authentication succeeds. A handover delay is long, and communications service quality is affected.

Therefore, how to reduce the handover delay and improve the communications service quality becomes an urgent problem to be resolved.

### SUMMARY

This application provides a beam tracking method and apparatus, to reduce a handover delay and improve communications service quality.

According to a first aspect, a beam tracking method is provided, including: A station STA obtains first information, where the first information includes period information of beam tracking performed by the STA with each of a plurality of access points APs; and the STA performs beam tracking with the plurality of APs based on the first information.

In the technical solution provided in this application, in a BPAC scenario, when the STA performs beam tracking with the plurality of APs, uncoordinated beams likely cause interference. Therefore, when performing beam tracking, the STA obtains the first information, and sequentially performs beam tracking with the plurality of APs based on the first information. This avoids interference, reduces a handover delay, and improves network communications quality.

It should be understood that the plurality of APs sequentially performing beam tracking with the STA includes that the plurality of APs perform beam tracking with the STA within different time periods. For example, a first AP performs beam tracking with the STA within a first time period, a second AP performs beam tracking with the STA within a second time period, and a third AP performs beam tracking with the STA within a third time period. Alternatively, when the STA initiates a beam tracking request, all APs in a same cluster start to perform beam tracking at the same time when receiving the beam tracking request. After performing beam tracking, the plurality of APs may send feedback information to the STA within different time periods, to avoid interference. For example, the first AP feeds back a beam tracking result to the STA within the first time period, the second AP feeds back a beam tracking result to the STA within the second time period, and the third AP feeds back a beam tracking result to the STA within the third time period. Alternatively, the plurality of APs perform beam tracking with the STA within different time periods, and feed back beam tracking results to the STA within different time periods after the beam tracking ends. A specific implementation is not limited in this embodiment of this application.

With reference to the first aspect, in some implementations of the first aspect, the plurality of APs include a control AP, the control AP can communicate with each of the plurality of APs, and that a STA obtains first information includes: The STA obtains the first information from the control AP.

With reference to the first aspect, in some implementations of the first aspect, the first information is obtained by the control AP by polling an idle time period of each of the plurality of APs.

For example, when the STA moves, communications quality of a link between the STA and a current serving AP (serving AP) is degraded, and a current communications requirement cannot be met. To ensure the communications quality, the STA initiates, to the control AP, a request for performing beam tracking with another AP, to reselect an AP that can meet the communications requirement for re-access.

After each of the plurality of APs receives beam tracking request information sent by the control AP, the AP sends a beam tracking request response message to the control AP. The beam tracking request response message includes the idle time period of the AP.

After obtaining the beam tracking request response message sent by each of the plurality of APs, the control AP determines the first information based on the idle time period of each AP. Therefore, the plurality of APs sequentially perform beam tracking with the STA, to avoid interference.

With reference to the first aspect, in some implementations of the first aspect, the first information is determined by the control AP based on a reserved time interval RTI of each of the plurality of APs.

In some possible implementations, the control AP may reserve a reserved time interval (reserved time interval, RTI) in a beacon interval (beacon interval, BI) of each AP in advance, and the control AP determines the first information based on the RTI of each of the plurality of APs. Burst beam tracking and handover are performed in the RTI.

With reference to the first aspect, in some implementations of the first aspect, the first information is determined by the control AP based on a measurement report of beam training performed by the STA with each of the plurality of APs.

In some possible implementations, the STA may first perform beam training with each of all APs in a same cluster, and send the beam training measurement report to the control AP. The beam training measurement report includes time scheduling information of each AP. The control AP determines the first information based on the time scheduling information in the beam training measurement report of each of the plurality of APs. In this way, the plurality of APs sequentially perform beam tracking with the STA.

In the foregoing technical solution, because the STA completes beam training with all the APs in the cluster in advance, and stores beam training results in a historical measurement report, the STA and the control AP have the time scheduling information of all the APs. When the STA needs to perform beam tracking with another AP, the control AP does not need to query each AP for an idle time period, and each AP does not need to feed back its idle time period to the control AP. This greatly reduces information exchange between the AP and the control AP, simplifies a process, and reduces a handover delay.

With reference to the first aspect, in some implementations of the first aspect, that the STA performs beam tracking with the plurality of APs based on the first information includes: The STA separately performs beam tracking with a corresponding AP within a beam tracking period of each of the plurality of APs.

With reference to the first aspect, in some implementations of the first aspect, that the STA performs beam tracking with the plurality of APs based on the first information includes:

The STA feeds back, by using the control AP within a feedback period, results of beam tracking with the plurality of APs.

In the foregoing technical solution, in a feedback phase between the STA and each AP, a feedback is not provided first, to reduce power consumption of handover of the STA. Instead, all the beam tracking results are fed back to the current serving AP after beam tracking between the STA and all the APs is completed. The current serving AP feeds back the beam tracking result to the control AP. Finally, the control AP feeds back the beam tracking result to each AP. This enriches a procedure in which the STA performs beam tracking with the plurality of APs.

According to a second aspect, another beam tracking method is provided, including: A control access point AP obtains first information, where the first information includes period information of beam tracking performed by a station STA with each of a plurality of APs; and the control AP sends the first information to the STA.

With reference to the second aspect, in some implementations of the second aspect, that a control AP obtains first information includes: The control AP obtains the first information by polling an idle time period of each of the plurality of APs.

With reference to the second aspect, in some implementations of the second aspect, that the control AP obtains the first information by polling an idle time period of each of the plurality of APs includes: The control AP receives a beam tracking request message sent by the STA; the control AP sends the beam tracking request message to each of the plurality of APs; the control AP receives a beam tracking request response message sent by each of the plurality of APs, where the beam tracking request response message includes the idle time period of each of the plurality of APs; and the control AP determines the first information based on the idle time period of each of the plurality of APs.

With reference to the second aspect, in some implementations of the second aspect, that a control AP obtains first information includes: The control AP obtains a reserved time interval RTI of each of the plurality of APs; and the control AP determines the first information based on the RTI of each of the plurality of APs.

With reference to the second aspect, in some implementations of the second aspect, that a control AP obtains first information includes: The control AP obtains a measurement report of beam training performed by the STA with each of the plurality of APs; and the control AP determines the first information based on the measurement report.

With reference to the second aspect, in some implementations of the second aspect, the method further includes: sending second information to each of the plurality of APs. The second information includes period information of beam tracking performed by the STA with each of the plurality of APs.

After determining time scheduling for performing beam tracking between the plurality of APs and the STA, the control AP separately sends corresponding time scheduling information to each AP. Therefore, the plurality of APs can sequentially perform beam tracking with the STA.

With reference to the second aspect, in some implementations of the second aspect, the method further includes: The control AP feeds back a result of beam tracking with the plurality of APs to the STA within a feedback period.

According to a third aspect, still another beam tracking method is provided, including: A member access point M-AP obtains second information, where the second information includes period information of beam tracking performed by the M-AP with a STA, and a plurality of APs include the M-AP; and the M-AP performs beam tracking with the STA based on the second information.

With reference to the third aspect, in some implementations of the third aspect, the plurality of APs include a control AP, the control AP can communicate with each M-AP in the plurality of APs, and that an M-AP obtains second information includes: The M-AP obtains the second information from the control AP.

With reference to the third aspect, in some implementations of the third aspect, the second information is obtained by the control AP by polling an idle time period of each M-AP in the plurality of APs.

With reference to the third aspect, in some implementations of the third aspect, the second information is determined by the control AP based on a reserved time interval RTI of each M-AP in the plurality of APs.

With reference to the third aspect, in some implementations of the third aspect, the second information is determined by the control AP based on a measurement report of beam training performed by the STA with each MAP in the plurality of APs.

With reference to the third aspect, in some implementations of the third aspect, that the M-AP performs beam tracking with the STA based on the second information includes: The M-AP performs beam tracking with the STA within a beam tracking period corresponding to the M-AP.

With reference to the third aspect, in some implementations of the third aspect, that the M-AP performs beam tracking with the STA based on the second information includes: The M-AP feeds back a beam tracking result to the STA by using the control AP within a feedback period.

According to a fourth aspect, a security verification method is provided, including: A control access point AP obtains first key information, where the first key information is a key obtained after a station STA initially associates with at least one of a plurality of access points APs, the plurality of APs include the control AP, and the control AP can communicate with each of the plurality of APs; and the control AP sends the first key information.

It may be considered that a current serving AP of the STA and a plurality of other APs are in a same cluster. Because the STA and the serving AP of the STA have completed initial association authentication, the STA obtains a pairwise master key (pairwise master key, PMK) shared by the STA and the serving AP. It is assumed that each of the plurality of APs is a virtual antenna of the control AP, the STA handing over from one AP to another AP may be considered as handing over from one antenna of the control AP to another antenna. All antennas can share the generated pairwise master key PMK

With reference to the fourth aspect, in some implementations of the fourth aspect, the first key information is a key obtained after the station STA initially associates with each of the plurality of access points APs, and that a control AP obtains first key information includes: The control AP receives the first key information sent by the serving AP of the STA.

With reference to the fourth aspect, in some implementations of the fourth aspect, the first key information is a key obtained after the station STA initially associates with a first AP in the plurality of access points APs, and that a control AP obtains first key information includes: The control AP generates the first key information for the first AP.

In the foregoing technical solution, when the STA hands over from the current serving AP to a target AP, because the APs in the cluster share the first key information or obtain in advance, first key information corresponding to the APs, association authentication does not need to be performed each time when the STA performs AP handover, provided that the target AP agrees on the handover. This reduces a handover delay, and ensures communications service quality.

With reference to the fourth aspect, in some implementations of the fourth aspect, that the control AP sends the first key information includes: The control AP receives first request messages sent by the plurality of APs, where the first request message is used to request the first key information from the control AP; and the control AP sends the first key information to the plurality of APs.

In some possible implementations, after obtaining the first key information, the control AP does not need to send the first key information to each of the plurality of APs. The control AP may first store the first key information. When the STA needs to hand over to the target AP, the target AP sends a first request message to the control AP. The first request message is used to request the first key information from the control AP.

With reference to the fourth aspect, in some implementations of the fourth aspect, that the control AP sends the first key information includes: The control AP receives a first request message sent by the first AP, where the first request message is used to request the first key information from the control AP; and the control AP sends the first key information to the first AP.

With reference to the fourth aspect, in some implementations of the fourth aspect, the method further includes: The control AP receives a first handover request message sent by the serving AP, where the first handover request message includes information used to generate a second key, and the second key is used to indicate the STA to perform data transmission with the target AP; the control AP sends the first handover request message to the target AP; the control AP receives a first handover request response message sent by the target AP, where the first handover request response message includes the information used to generate the second key; and the control AP sends the first handover request response message to the serving AP.

Optionally, the first handover request message includes at least one piece of the following information: identification information of the target AP, robust security network element (robust security network element, RSNE) information, and random number information of the STA.

The identification information of the target AP is used to indicate an AP to which the STA hands over. For example, the identification information of the target AP may be a number of the target AP. AP#1 indicates that the STA hands over to an AP 1, and AP#2 indicates that the STA hands over to an AP 2. A specific identification manner is not limited in this embodiment of this application, provided that an AP in the cluster can be uniquely identified.

The RSNE information and a random number of the STA are element information for generating the first key information. Optionally, the random number of the STA may include at least one of the following: a media access control (media access control, MAC) address of the STA and a random number Snonce of the STA.

According to a fifth aspect, a security verification method is provided, including: A station STA sends a second handover request message to a serving access point AP of the STA. The second handover request message includes first key information, the first key information is used to generate a second key, and the second key is used to indicate the STA to perform data transmission with a target AP in a plurality of APs. The first key information is key information obtained after the STA initially associates with each of the APs, or the first key information is key information obtained after the STA initially associates with a first AP in the plurality of APs.

With reference to the fifth aspect, in some implementations of the fifth aspect, the method further includes: When the serving AP rejects handover, the STA receives a second handover response message sent by the serving AP. The second handover response message includes a reason why the serving AP rejects the handover.

With reference to the fifth aspect, in some implementations of the fifth aspect, the method further includes: The STA receives a third handover request message sent by the serving AP, where the third handover request message includes information used to generate the second key; and the STA sends the third handover request response message to the serving AP.

With reference to the fifth aspect, in some implementations of the fifth aspect, the method further includes: When the target AP rejects handover, the STA receives a third handover request response message sent by the target AP.

According to a sixth aspect, a security verification method is provided, applied to a communications system including a station STA and a plurality of access points APs. The method includes: An access point AP obtains first key information from a control AP, where the first key information is key information obtained after the station STA initially associates with the AP, the plurality of APs include the control AP, and the control AP can communicate with each of the plurality of APs; and the STA hands over from a serving AP to the AP based on the first key information.

With reference to the sixth aspect, in some implementations of the sixth aspect, that the STA hands over from a serving AP to the AP based on the first key information includes: A target AP receives a first handover request message sent by the control AP, where the first handover request message includes information used to generate a second key, and the second key is used to indicate the station STA to perform data transmission with the target AP; and the target AP sends a first handover request response message to the control AP.

With reference to the sixth aspect, in some implementations of the sixth aspect, when the target AP rejects the handover, the first handover request response message includes a rejection reason.

With reference to the sixth aspect, in some implementations of the sixth aspect, the method further includes: When the target AP rejects the handover, the target AP sends a third handover request response message to the STA. The third handover request response message includes a rejection reason.

According to a seventh aspect, a beam tracking apparatus is provided, and is configured to perform the method in any one of the first aspect or the possible implementations of the first aspect. Specifically, the apparatus includes a unit configured to perform the method in any one of the first aspect or the possible implementations of the first aspect.

According to an eighth aspect, another beam tracking apparatus is provided, and is configured to perform the method in any one of the second aspect or the possible implementations of the second aspect. Specifically, the apparatus includes a unit configured to perform the method in any one of the second aspect or the possible implementations of the second aspect.

According to a ninth aspect, a beam tracking apparatus is provided, and is configured to perform the method in any one of the third aspect or the possible implementations of the third aspect. Specifically, the apparatus includes a unit configured to perform the method in any one of the third aspect or the possible implementations of the third aspect.

According to a tenth aspect, another beam tracking apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control a receiver to receive a signal and control a transmitter to send a signal. When the processor executes the instructions stored in the memory, the processor is enabled to perform the methods according to the foregoing aspects or any one of the possible implementations of the foregoing aspects.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, for example, a read-only memory (read-only memory, ROM). The memory and the processor may be integrated into one chip, or may be disposed in different chips. A type of the memory and a manner of disposing the memory and the processor are not limited in this embodiment of this application.

According to an eleventh aspect, a beam tracking system is provided. The system includes an apparatus configured to implement the method according to any one of the first aspect or the possible implementations of the first aspect, an apparatus configured to implement the method according to any one of the second aspect or the possible implementations of the second aspect, and an apparatus configured to implement the method according to any one of the third aspect or the possible implementations of the third aspect. In one design, the system includes an apparatus configured to implement the method performed by a station, an apparatus configured to implement the method performed by a control access point, and an apparatus configured to implement the method performed by another access point.

According to a twelfth aspect, a computer program product is provided. The computer program product includes computer program code. When the computer program code is run on a computer, the computer is enabled to perform the methods in the foregoing aspects.

According to a thirteenth aspect, a computer-readable medium is provided, and is configured to store a computer program. The computer program includes instructions used to perform the methods in the foregoing aspects.

According to a fourteenth aspect, a chip is provided. The chip includes a processor, configured to invoke and run instructions stored in the memory, and a communications device in which the chip is installed is enabled to perform the methods according to the foregoing aspects.

According to a fifteenth aspect, another chip is provided. The chip includes an input interface, an output interface, a processor, and a memory. The input interface, the output interface, the processor, and the memory are connected to each other through an internal connection path. The processor is configured to execute code in the memory. When the code is executed, the processor is configured to perform the methods according to the foregoing aspects.

### DESCRIPTION OF DRAWINGS

FIG. 1 is a schematic diagram of a communications system according to an embodiment of this application;
FIG. 2 is a schematic flowchart of a beam tracking method according to an embodiment of this application;
FIG. 3 is a schematic flowchart of a control AP determining first information;
FIG. 4 is a schematic diagram of a structure of a schedule request frame according to an embodiment of this application;
FIG. 5 is a schematic diagram of a structure of a beam tracking request element frame in a BPAC scenario;
FIG. 6 is a schematic diagram of a structure of a beacon interval BI;
FIG. 7 is an overall flowchart of beam tracking in a BPAC scenario according to an embodiment of this application;
FIG. 8 is an overall flowchart of beam tracking in another BPAC scenario according to an embodiment of this application;
FIG. 9 is a schematic diagram of a structure of a feedback frame according to an embodiment of this application;
FIG. 10A and FIG. 10B are an overall flowchart of multi-STA multi-AP beam tracking;
FIG. 11 is a schematic flowchart of a security verification method according to an embodiment of this application;
FIG. 12 is a schematic flowchart of beam tracking handover according to an embodiment of this application;
FIG. 13 is a schematic flowchart of another beam tracking handover according to an embodiment of this application;
FIG. 14 is a schematic flowchart of still another beam tracking handover according to an embodiment of this application;
FIG. 15 is a schematic flowchart of yet another beam tracking handover according to an embodiment of this application;
FIG. 16 is a schematic diagram of a beam tracking apparatus according to an embodiment of this application; and
FIG. 17 is a schematic diagram of another beam tracking apparatus according to an embodiment of this application.

### DESCRIPTION OF EMBODIMENTS

The following describes technical solutions of this application with reference to the accompanying drawings.

The technical solutions in embodiments of this application may be applied to various communications systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, a future 5th generation (5th Generation, 5G) system, or a new radio (New Radio, NR) system.

The technical solutions in the embodiments of this application may be further applied to a wireless local area network (wireless local area network, WLAN), and the embodiments of this application can be applicable to any protocol in the Institute of Electrical and Electronics Engineers (institute of electrical and electronics engineers, IEEE) 802.11 series protocols currently used for the WLAN.

The WLAN may include a plurality of communications nodes, for example, one or more personal basic service set control points/access points (personal basic service set control points/access points, PCPs/APs) and one or more stations (stations, STAs).

It should be understood that, in the embodiments of this application, the station may also be referred to a system, a subscriber unit, an access terminal, a mobile station, a remote station, a remote terminal, a mobile device, a user terminal, a terminal, a wireless communications device, a user agent, a user apparatus, or user equipment (user equipment, UE). The station may be a wireless communications chip, a wireless sensor, or a wireless communications terminal. For example, the station is a mobile phone supporting a Wi-Fi communications function, a tablet computer supporting a Wi-Fi communications function, a set-top box supporting a Wi-Fi communications function, a smart television supporting a Wi-Fi communications function, an intelligent wearable device supporting a Wi-Fi communications function, a vehicle-mounted communications device supporting a Wi-Fi communications function, or a computer supporting a Wi-Fi communications function. Optionally, the station may support the 802.1 1ax standard. Further, optionally, the station supports a plurality of WLAN standards such as 802.11ac, 802.11n, 802.11g, 802.11b, 802.11ad, and 802.11ay.

The AP in the embodiments of this application may be configured to: communicate with the access terminal by using the wireless local area network, and transmit data from the access terminal to a network side, or transmit data from a network side to the access terminal. The AP is also referred to as a wireless access point, a hotspot, or the like. The AP is an access point used by a mobile user to access a wired network, and is mainly deployed at home, inside a building or inside a campus, and has a typical coverage radius of tens of meters to hundreds of meters. Certainly, the AP may alternatively be deployed outdoors. The AP is equivalent to a bridge that connects the wired network and a wireless network. The AP is mainly configured to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports the 802.11ax standard. Further, optionally, the AP may be a device that supports a plurality of WLAN standards such as 802.11ac, 802.11n, 802.11g, 802.11b, 802.11ad, and 802.11ay.

In the embodiments of this application, the access point or the station includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in the embodiments of this application is not specially limited in the embodiments of this application, provided that a program that records code of the method provided in the embodiments of this application can be run to perform communication according to the method provided in the embodiments of this application. For example, the method provided in the embodiments of this application may be performed by the access point or the station, or a functional module that can invoke and execute the program in the access point or the station.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but are not limited to a radio channel and various other media that can store, include, and/or carry instructions and/or data.

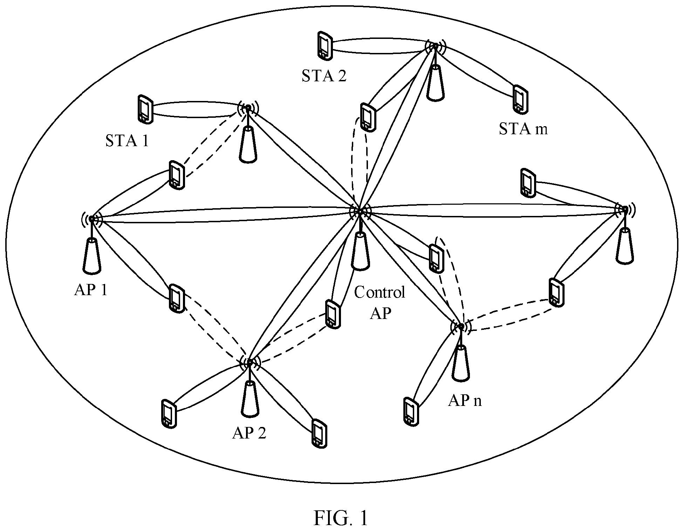

FIG. 1 is a schematic diagram of a communications system according to an embodiment of this application. As shown in FIG. 1, the communications system includes a plurality of APs. For the plurality of APs, there are further one or more STAs within coverage of all or some of the APs. Specifically, in the communications system shown in FIG. 1, there are a total of n APs and m STAs in the communications system. Both m and n are integers greater than or equal to 1.

It should be understood that the communications system may be applicable to a moving scenario, or a non-moving scenario. In other words, the STA may be mobile or fixed. Therefore, when a STA can move, a quantity of STAs within coverage of an AP may change in real time. In other words, there may be a moment at which an AP does not cover any STA. This is not limited in this embodiment of this application.

In the communications system shown in FIG. 1, a STA 1 is used as an example. The STA 1 is currently connected to and in communication with an AP 1. When the STA 1 moves (a position of the STA 1 changes, excluding a situation where the STA 1 rotates or is blocked), quality of communication between the STA 1 and the AP 1 is degraded. To ensure the communications quality, the STA 1 first performs beam tracking with the AP 1. If the communications quality can be restored, the STA 1 does not need to perform beam tracking with another AP within the coverage. If the communications quality cannot be restored, the STA 1 needs to perform beam tracking with another AP within the coverage, to determine a new AP. In this way, the STA hands over from the AP 1 to the new AP. This ensures the communications quality.

However, there are a plurality of APs within the coverage. If the APs are not coordinated, there is interference when the STA 1 performs beam tracking with the plurality of APs. In addition, when communications quality of a link between the STA 1 and the AP 1 is degraded, if beam tracking between the STA 1 and the another AP is not performed in advance, when AP handover needs to be performed, the STA 1 first disconnects from the AP 1, and then performs beam tracking, to determine the new AP. When the AP 1 changes to the new AP, information exchange authentication needs to be performed between the new AP and the STA, and network communication can be performed only after the authentication succeeds. In a handover process, a long handover delay affects communications service quality.

In view of this, an embodiment of this application provides a beam tracking method, to reduce a handover delay and improve communications service quality.

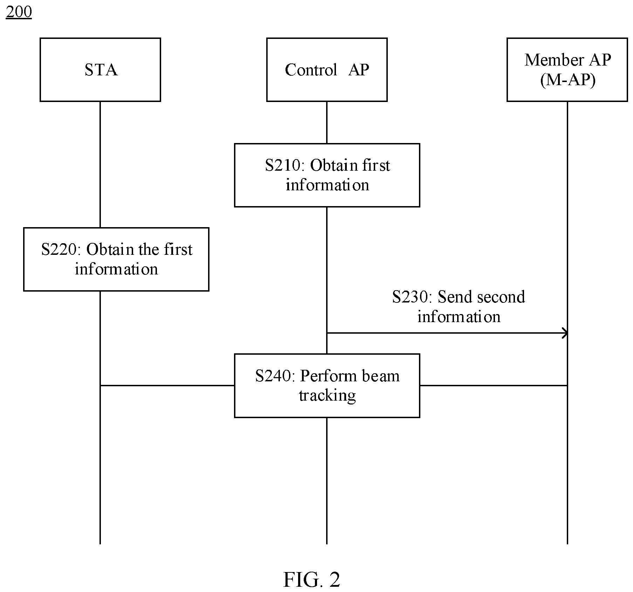

FIG. 2 is a schematic flowchart of a beam tracking method 200 according to an embodiment of this application. The method 200 may be applied to the communications system 100 shown in FIG. 1. However, this embodiment of this application is not limited thereto.

S210: A control AP obtains first information.

As shown in FIG. 1, the control AP is an AP that can communicate with each of the plurality of APs. The first information includes period information of beam tracking performed by a station STA with each of the plurality of APs. In other words, the control AP determines that the plurality of APs can sequentially perform beam tracking, to avoid interference caused by beam tracking between the plurality of APs and the STA in a BPAC scenario.

It should be understood that the plurality of APs sequentially performing beam tracking with the STA includes that the plurality of APs perform beam tracking with the STA within different time periods. For example, a first AP performs beam tracking with the STA within a first time period, a second AP performs beam tracking with the STA within a second time period, and a third AP performs beam tracking with the STA within a third time period. Alternatively, when the STA initiates a beam tracking request, all APs in a same cluster start to perform beam tracking at the same time when receiving the beam tracking request. After performing beam tracking, the plurality of APs may send feedback information to the STA within different time periods, to avoid interference. For example, the first AP feeds back a beam tracking result to the STA within the first time period, the second AP feeds back a beam tracking result to the STA within the second time period, and the third AP feeds back a beam tracking result to the STA within the third time period. Alternatively, the plurality of APs perform beam tracking with the STA within different time periods, and feed back beam tracking results to the STA within different time periods after the beam tracking ends. A specific implementation is not limited in this embodiment of this application.

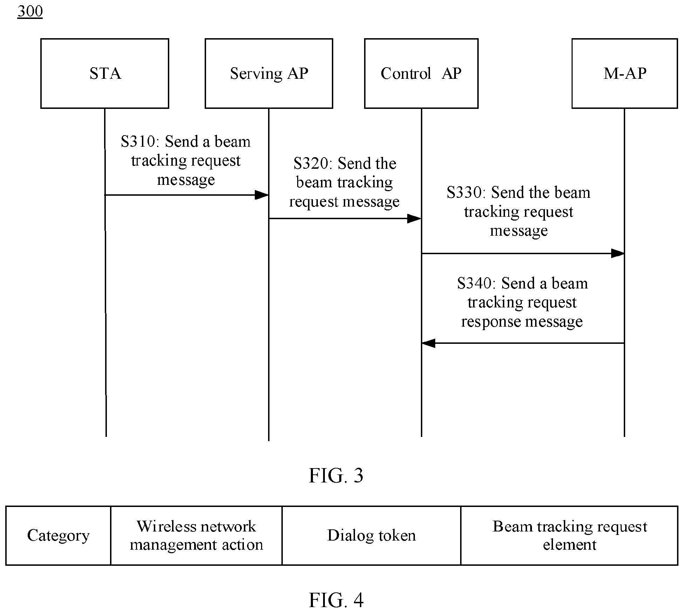

In some possible implementations, before the control AP obtains the first information, the method further includes another step. FIG. 3 is a schematic flowchart of a control AP determining first information.

As shown in FIG. 3, before the control AP obtains the first information, the method further includes step S310. The STA sends beam tracking request information to a serving AP, to request the serving AP to perform beam tracking.

S320: The serving AP sends a beam tracking request message to the control AP.

After receiving the beam tracking request message sent by the STA, the serving AP forwards the beam tracking request message to the control AP, and requests the control AP to perform beam tracking.

When the STA moves, communications quality of a link between the STA and a current serving AP (serving AP) is degraded, and a current communications requirement cannot be met. To ensure the communications quality, the STA initiates a request for performing beam tracking with another AP, to reselect an AP that can meet the communications requirement for re-access.

It should be understood that, in some possible implementations, when the serving AP and the control AP of the STA are a same AP, steps S310 and S320 may be one step.

S330: The control AP sends the beam tracking request message to a member access point (member access point, M-AP).

After receiving the beam tracking request message sent by the STA, the control AP sends the beam tracking request message to each M-AP in the plurality of APs communicating with the control AP, to query an idle time period of the M-AP, namely, a period in which beam tracking can be performed with the STA. The plurality of APs may be M-APs in a same cluster as the original serving AP.

When sending the beam tracking request message, the control AP may not need to send the beam tracking request message to all the M-APs in the cluster, to reduce a beam tracking delay and device power consumption. The control AP sends the beam tracking request message only to an M-AP to which the STA may be handed over in a moving process.

For example, when an M-AP that may perform beam tracking with the STA is determined, an M-AP that is close to the STA may be selected. This is not limited in this embodiment of this application.

Optionally, the beam tracking request message may be carried in a schedule request (schedule request) frame.

FIG. 4 is a schematic diagram of a structure of a schedule request frame according to an embodiment of this application. As shown in FIG. 4, the schedule request frame may include one or a combination of more of the following pieces of information:
1. A category (category) field is used to indicate a type of a frame.
2. A wireless network management action (wireless network management action, WNM action) field is used to indicate a wireless network management action taken by an operating station.
3. A dialog token (dialog token) field is used to identify a current response to a specific request when there are a plurality of concurrent dialog requests.
4. A beam tracking request element field is used to request to perform beam tracking between a station and a target access point.

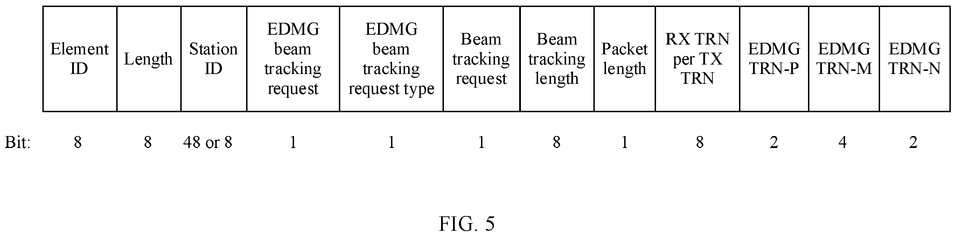

FIG. 5 is a schematic diagram of a structure of a beam tracking request element frame in a BPAC scenario. As shown in FIG. 5, the beam tracking request element frame may include one or a combination of more of the following pieces of information:
1. An element ID (element ID) field is used to identify and distinguish IDs of elements (elements).
2. A length (length) field is used to indicate a length of the element.
3. A station ID (station ID, STA ID) field is used to identify and distinguish IDs of stations (stations).
4. An enhanced directional multi-gigabit beam tracking request (enhanced directional multi-gigabit beam tracking request, EDMG BT request) field is used to request 802.11ay standard-based beam tracking.
5. An enhanced directional multi-gigabit beam tracking type (enhanced directional multi-gigabit beam tracking type, EDMG BT type) field is used to indicate an 802.1 1ay standard-based beam tracking type.
6. A beam tracking request (beam tracking request, BT request) field is used to request 802.11ad standard-based beam tracking.
7. A beam tracking type (beam tracking type, BT type) field is used to indicate an 802.11ad standard-based beam tracking type.
8. A beam tracking length (TRN-LEN) field is a parameter greater than 0, used to indicate a beam tracking length.
9. A packet type (packet type) field is used to indicate whether data tracking is receive beam refinement of an initiator, transmit beam refinement of an initiator, or receive beam refinement of a responder.
10. A receive training per transmit training (receive training per transmit training, RX TRN per TX TRN) field indicates a quantity of consecutive training units (training units, TRN-units) that use a same antenna weight vector (antenna weight vector, AWV).
11. An enhanced directional multi-gigabit training (enhanced directional multi-gigabit training, EDMG TRN-P) field indicates a quantity of TRN subdomains at the start of TRN-units that use a same AWV.
12. An enhanced directional multi-gigabit training (enhanced directional multi-gigabit training, EDMG TRN-M) field indicates a quantity of TRN subdomains that can be used for sending training in a TRN-unit.
13. An enhanced directional multi-gigabit training (enhanced directional multi-gigabit training, EDMG TRN-N) field indicates a quantity of TRN subdomains in each EDMG TRN-unit M domain.

S340: The M-AP sends a beam tracking request response message to the control AP.

After each M-AP in the plurality of APs receives the beam tracking request information sent by the control AP, the M-AP sends the beam tracking request response message to the control AP. The beam tracking request response message includes an idle time period of the M-AP.

After obtaining the beam tracking request response message sent by each M-AP in the plurality of APs, the control AP determines the first information based on the idle time period of each M-AP. Therefore, the plurality of APs sequentially perform beam tracking with the STA, to avoid interference.

In some possible implementations, the STA may first perform beam training with each M-AP in all APs in a same cluster, and send a beam training measurement report to the control AP. The beam training measurement report includes time scheduling information of each M-AP. The control AP determines the first information based on the time scheduling information in the beam training measurement report of each M-AP in the plurality of APs. In this way, the plurality of APs sequentially perform beam tracking with the STA.

In the foregoing technical solution, because the STA completes beam training with all the APs in the cluster in advance, and stores beam training results in a historical measurement report, the STA and the control AP have the time scheduling information of all the APs. When the STA needs to perform beam tracking with another AP, the control AP does not need to query each M-AP for an idle time period, and each M-AP does not need to feed back its idle time period to the control AP. This greatly reduces information exchange between the M-AP and the control AP, simplifies a process, and reduces a handover delay.

It should be understood that the historical measurement report is merely a form including the first information, provided that the historical measurement report can be used to indicate the idle time period of each MAP in the plurality of APs. A specific form of the historical measurement report is not limited in this embodiment of this application.

In some possible implementations, the control AP may reserve a reserved time interval (reserved time interval, RTI) in a beacon interval (beacon interval, BI) of each M-AP in advance, and the control AP determines the first information based on the RTI of each M-AP in the plurality of APs. Burst beam tracking and handover are performed in the RTI.

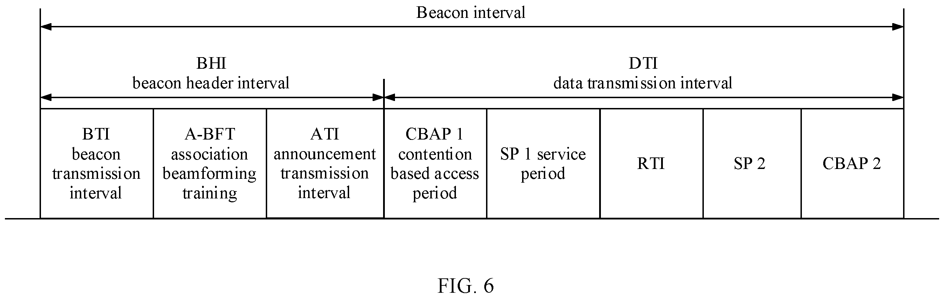

FIG. 6 is a schematic diagram of a structure of a beacon interval BI. As shown in FIG. 6, the beacon interval is classified into a beacon header interval (beacon header interval, BHI) and a data transmission interval (data transmission interval, DTI). The BHI further includes a beacon transmission interval (beacon transmission interval, BTI), an association beamforming training (association beamforming training, A-BFT) interval, and an announcement transmission interval (announcement transmission interval, ATI).

Specifically, a PCP/AP sends a plurality of beacon (beacon) frames in the BTI based on a sector number. The beacon frames are used for downlink sector sweep. An A-BFT is used by a STA for association and uplink sector sweep. An ATI is used by the PCP/AP to poll the STA for buffered data information and allocate a resource in the data transmission interval (data transmission interval, DTI) to the STA. The entire DTI is divided into several subintervals, and the subintervals are divided into a contention-based access period (contention-based access period, CBAP) and a service period (service period, SP) based on an access manner. In the service period, scheduling transmission is performed, and contention does not need to be performed.

The control AP sets an RTI in a DTI of each M-AP. The control AP only needs to learn about an RTI of an AP that performs beam tracking with the STA, so that the STA can sequentially perform beam tracking with the APs, to avoid interference. In addition, a beam tracking process is simplified, and a handover delay is reduced.

S220: The STA obtains the first information.

After determining the first information, the control AP sends the first information to a serving AP of the STA, and the serving AP sends the first information to the STA. In other words, the STA is notified of a time schedule of performing beam tracking between the STA and each of the plurality of APs, so that the STA can sequentially perform beam tracking with the plurality of APs, to avoid interference.

Optionally, in some possible implementations, if the serving AP of the STA is the control AP, the control AP directly sends the first information to the STA.

S230: The control AP sends second information to each M-AP in the plurality of APs.

The second information is a period in which each M-AP in the plurality of APs performs beam tracking with the STA. After coordinating the period in which each M-AP in the plurality of APs performs beam tracking with the STA, the control AP sends a time schedule of each M-AP to the corresponding M-AP.

Optionally, in some possible implementations, the control AP may alternatively send time scheduling information of all M-APs, namely, the first information, to all the M-APs. Each M-AP determines its corresponding time scheduling information, namely, the second information. This is not limited in this embodiment of this application.

S240: The STA performs beam tracking with the plurality of APs based on the first information.

After obtaining the first information, the STA sequentially performs beam tracking with the plurality of APs based on the time schedule, in the first information, of performing beam tracking with the plurality of APs, and determines a new serving AP from the plurality of APs. In this way, the STA hands over from the original serving AP to the new serving AP. This ensures communications quality.

In the foregoing technical solution, when communications quality of a link between the STA and the current serving AP is degraded because the STA moves, the STA needs to determine the new AP by using the beam tracking, and hand over from the current serving AP to the new AP, to ensure the communications quality. In a BPAC scenario, when a STA performs beam tracking with a plurality of APs, uncoordinated beams likely cause interference. Therefore, when performing beam tracking, the STA obtains first information, and sequentially performs beam tracking with the plurality of APs based on the first information, to avoid interference.

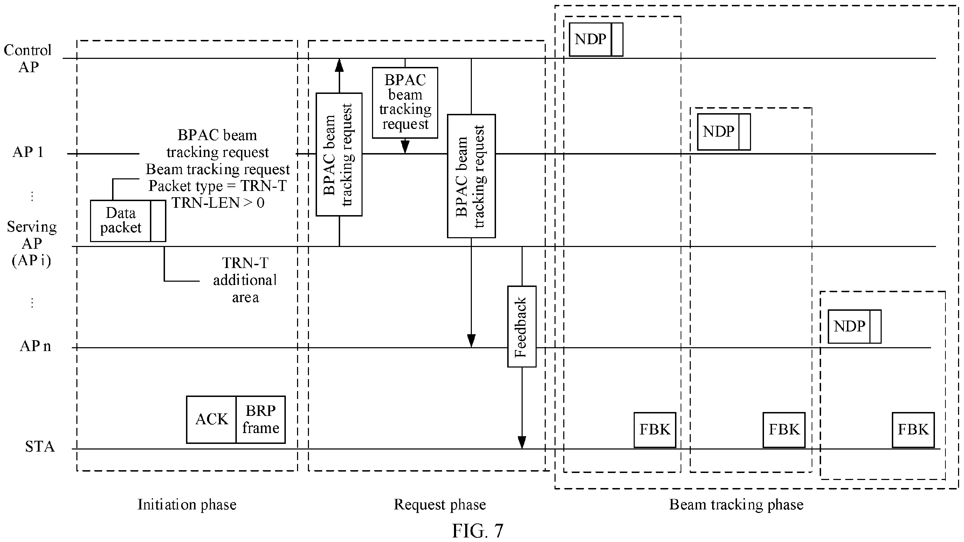

FIG. 7 is an overall flowchart of beam tracking in a BPAC scenario according to an embodiment of this application.

FIG. 7 shows an example in which an AP transmits beam training (transmit training, TRN-T), that is, an AP transmits beam refinement. When communications quality of a link is degraded, in an initiation phase, the AP requests, in a physical header (physical header, PHY Header) of a data (data) packet, to perform beam tracking, sets a packet type (packet type) field in the PHY header to TRN-T, sets a training length (training length, TRN-LEN) field to a parameter greater than 0, to indicate a beam tracking length, and adds a TRN-T field to the data packet, to send a plurality of beams in different directions. In addition, in the initiation phase of the BPAC scenario, one bit (bit) is added to indicate a BPAC beam tracking request (BPAC-BT Request), to initiate beam tracking with another AP. After receiving the packet, the STA adds a beam refinement protocol (beam refinement protocol, BRP) frame to a returned acknowledgment (acknowledgment, ACK) packet, to feed back an optimal transmit beam of the AP. After receiving the feedback, the AP initiating beam tracking may hand over to the optimal beam, to refine a tracking training procedure of a receive beam of the initiator AP.

In a request phase, as shown in FIG. 7, the control AP and the STA already learn about RTIs of all APs, and the control AP selects some possible APs to perform beam tracking based on historical measurement information. To be specific, the original serving AP initiates, to the control AP, a BPAC-BT (BPAC beam tracking, BPAC-BT) request message in the BPAC scenario. The BPAC-BT request message carries identification information of the STA, a beam tracking type, a TRN-LEN, AP list information, or previous measurement information. The control AP determines, based on the measurement information, APs that may perform beam tracking with the STA, and sends the BPAC-BT request message to the APs, including the identification information of the STA, the beam tracking type, the TRN-LEN, and the AP list information. The original serving AP feeds back the beam tracking type, the training length (training length, TRN-LEN), and the AP list information to the STA.

The beam tracking type may be a transmit/receive beam of an initiator of beam tracking, or a transmit/receive beam of a responder of beam tracking. Alternatively, both a transmit beam of one party and a receive beam of another party may be trained at the same time. This is not limited in this embodiment of this application.

In a beam tracking training phase, the APs selected by the STA perform beam tracking in an RTI of each AP, and the STA receives feedback information in the RTI of each AP.

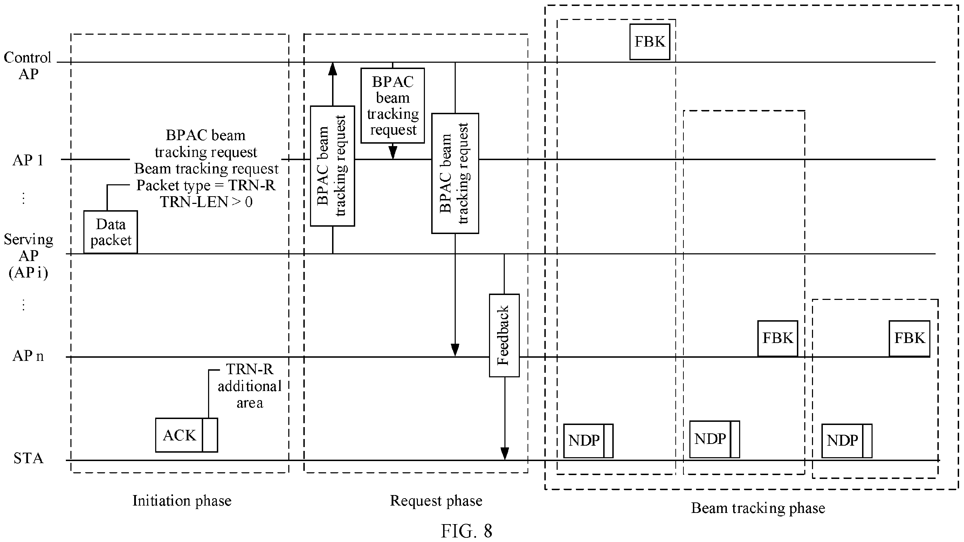

FIG. 8 is an overall flowchart of beam tracking in another BPAC scenario according to an embodiment of this application.

FIG. 8 shows an example in which a STA receives beam training (receive training, TRN-R), that is, a STA receives beam refinement. When communications quality of a link is degraded, in an initiation phase, the STA requests, in a PHY header of a data packet, to perform beam tracking, sets a packet type field in the PHY header to TRN-R, and sets a TNR-LEN field to a parameter greater than 0, to indicate a beam tracking length. In addition, in the initiation phase of the BPAC scenario, one bit (bit) is added to indicate a BPAC beam tracking request (BPAC-BT Request), to initiate beam tracking with another AP. After receiving the packet, the AP adds a TRN-R field to a returned acknowledgment (ACK) packet, where the field includes a plurality of TRN units, and sends a plurality of beams in different directions. After receiving the beams in different directions, the STA may select an optimal receive beam for the STA, to refine a receive beam of the STA.

For a subsequent request phase and a beam tracking training phase, refer to the description of FIG. 7. For brevity, details are not described herein again.

In the overall flowchart of the beam tracking in the BPAC scenario shown in FIG. 7, in a feedback (feedback, FBK) phase of the beam tracking, after the STA completes beam tracking training with each of the plurality of APs, the STA feeds back a beam tracking result to the AP.

Optionally, in some possible implementations, in a feedback phase between the STA and each AP, a feedback is not provided first, to reduce power consumption of handover of the STA. Instead, all results are fed back to the current serving AP after beam tracking between the STA and all the APs is completed. The current serving AP feeds back the result to the control AP. Finally, the control AP feeds back the result to each AP. This enriches the procedure in which the STA performs beam tracking with the plurality of APs.

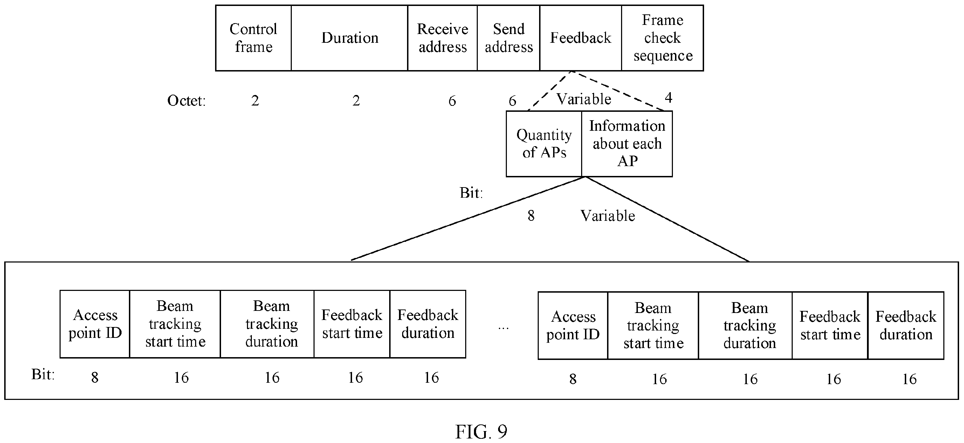

FIG. 9 is a schematic diagram of a structure of a feedback frame according to an embodiment of this application. As shown in FIG. 9, the feedback frame may include one or a combination of more of the following pieces of information:
1. A frame control (frame control) field is used to indicate control information, used by the frame, such as a MAC version, a frame type, a fragment indication, and a retransmission indication.
2. A duration (duration) field is used to indicate feedback duration.
3. A receive address (receive address, RA) field is used to indicate an address for receiving a feedback.
4. A transmit address (transmit address, TA) field is used to indicate an address for sending a feedback.
5. A feedback (feedback) field includes feedback information of each of a plurality of APs.
6. A frame check sequence (frame check sequence, FCS) field is used to verify integrity of a frame during transmission.

The feedback field is variable, and is related to a quantity of APs with which a STA performs beam tracking. The feedback field includes a quantity of APs (quantity of APs) and information about each AP. The information about each AP includes one or a combination of more of the following pieces of information:
1. An access point ID (AP ID) field is used to identify and distinguish IDs of APs.
2. A beam tracking start time (BT Start time) field is used to indicate a start time of beam tracking between a STA and an AP indicated by the AP ID field.
3. A beam tracking duration (BT duration) field is used to indicate duration of the beam tracking between the STA and the AP indicated by the AP ID field.
4. A feedback start time (feedback start time) field is used to indicate start time of a feedback phase between the STA and the AP indicated by the AP ID field.
5. A feedback duration (feedback duration) field is used to indicate duration of the feedback phase between the STA and the AP indicated by the AP ID field.

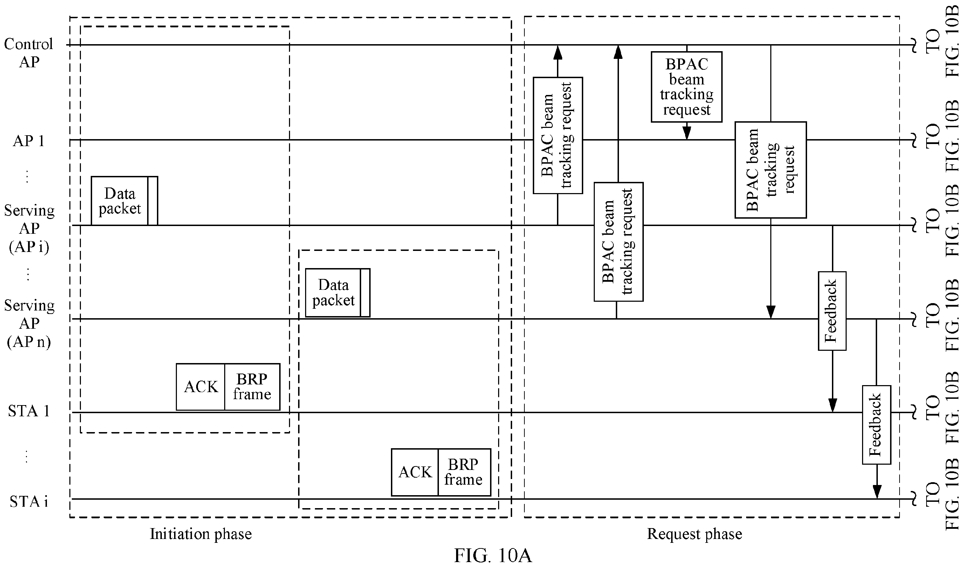

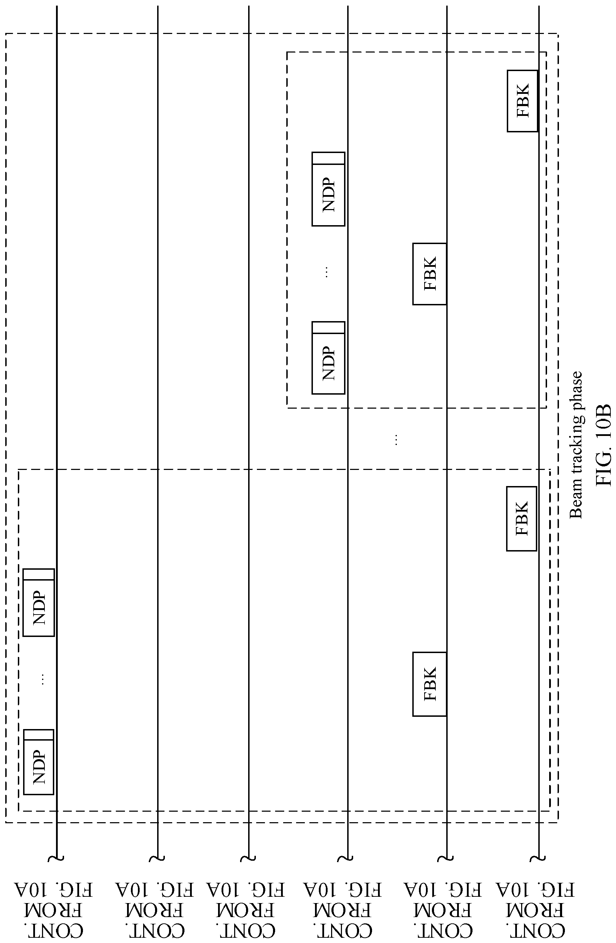

FIG. 10A and FIG. 10B are an overall flowchart of multi-STA multi-AP beam tracking. As shown in FIG. 10 A and FIG. 10B, in an RTI period of each AP, all STAs participating in beam tracking are in a connected state, which may be understood that beam tracking procedures of one STA and a plurality of APs overlap. For a specific procedure, refer to the description of FIG. 7 and FIG. 8. Details are not described herein again.

After the beam tracking procedure, the STA needs to hand over from a currently serving AP to a new AP. When the STA hands over to the new AP, 802.1X authentication and 4-way handshake are required. A handover delay is long, and data transmission is interrupted for a long time. This affects user experience.

In view of this, an embodiment of this application provides a security verification method, so that a STA can perform initial association authentication with an AP in a cluster. When the STA subsequently hands over to another AP in the cluster, association authentication does not need to be performed, provided that the target AP to which the STA hands over agrees on the handover. In this way, a handover delay is reduced, and user experience is improved.

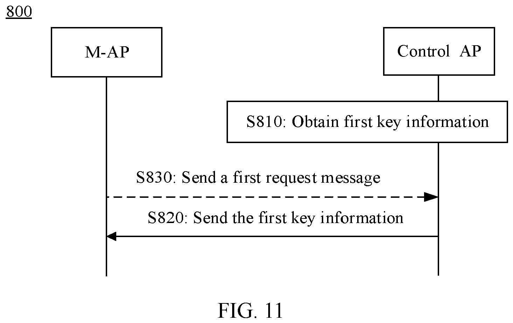

FIG. 11 is a schematic flowchart of a security verification method according to an embodiment of this application. The method 800 may be applied to the communications system 100 shown in FIG. 1. However, this embodiment of this application is not limited thereto.

The following describes in detail the security verification method with reference to FIG. 11.

S810: A control AP obtains first key information.

The first key information is key information obtained after a STA initially associates with at least one M-AP in a plurality of APs.

It may be considered that a current serving AP of the STA and a plurality of other APs are in a same cluster. Because the STA and the serving AP of the STA have completed initial association authentication, the first key information, for example, pairwise master key security association (pairwise master key security association, PMKSA), shared by the STA and the serving AP is obtained, where the PMKSA includes a pairwise master key (pairwise master key, PMK). It is assumed that each of the plurality of APs is an antenna of the control AP, the STA handing over from one AP to another AP may be considered as handing over from one antenna of the control AP to another antenna. All antennas can share the PMKSA and the generated pairwise master key PMK

Alternatively, in some possible implementations, the STA may initially associate with each of the plurality of APs, and generate first key information of a corresponding AP in advance, where first key information of each AP is different.

S820: The control AP sends the first key information.

When the STA initially associates with one AP in the cluster, the control AP sends the first key information to all the APs in the cluster before the STA performs handover. In this way, all the APs in the cluster share the first key information. When the STA hands over from the currently serving AP to the target AP, 802.1X authentication does not need to be performed. The STA can directly connect to the target AP, provided that the target AP agrees on the handover. This reduces a handover delay caused by security authentication.

Optionally, before S820, the method 800 may further include S830.

S830: The control AP receives first request messages sent by a plurality of M-APs.

In some possible implementations, after obtaining the first key information, the control AP does not need to send the first key information to each M-AP in the plurality of APs. The control AP may first store the first key information. When the STA needs to hand over to a new M-AP, the M-AP sends a first request message to the control AP. The first request message is used to request the first key information from the control AP.

In the foregoing technical solution, when the STA hands over from the current serving AP to the target AP, because the APs in the cluster share the first key information or obtain, in advance, first key information corresponding to the APs, association authentication does not need to be performed each time when the STA performs AP handover, provided that the target AP agrees on the handover. This reduces a handover delay, and ensures communications service quality.

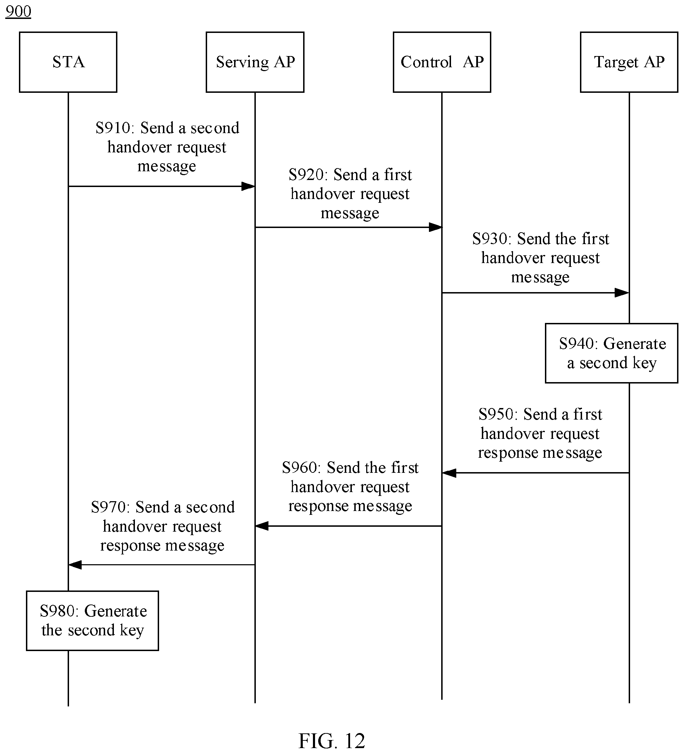

FIG. 12 is a schematic flowchart of beam tracking handover according to an embodiment of this application. A method 900 may be applied to the communications system 100 shown in FIG. 1. However, this embodiment of this application is not limited thereto.

S910: A STA sends a second handover request message to a serving AP.

The second handover request message includes information used to generate a second key, and the second key is used to indicate the STA to perform data transmission with a target AP.

Optionally, the second handover request message includes at least one piece of the following information: identification information of the target AP, robust security network element (robust security network element, RSNE) information, and random number information of the STA.

The identification information of the target AP is used to indicate an AP to which the STA hands over. For example, the identification information of the target AP may be a number of the target AP. AP#1 indicates that the STA hands over to an AP 1, and AP#2 indicates that the STA hands over to an AP 2. A specific identification manner is not limited in this embodiment of this application, provided that an AP in a cluster can be uniquely identified.

The RSNE information and a random number of the STA are element information for generating the first key information. Optionally, the random number of the STA may include at least one of the following: a media access control (media access control, MAC) address of the STA and a random number Snonce of the STA.

S920: The serving AP sends a first handover request message to the control AP.

Optionally, the first handover request message includes at least one piece of the following information: identification information of the target AP, robust security network element (robust security network element, RSNE) information, and random number information of the STA.

Optionally, in some possible implementations, if the control AP is the serving AP of the STA, S920 may not be performed.

S930: The control AP sends the first handover request message to the target AP.

After receiving the first handover request message sent by the serving AP of the STA, the control AP sends the first handover request message to the target AP.

S940: The target AP generates the second key.

Optionally, the second key is a pairwise transient key (pairwise transient key, PTK). After receiving the first handover request message sent by the control AP, the target AP obtains the PTK through negotiation based on MAC address information of the STA, MAC address information of the target AP, the Snonce of the STA, a random number Anonce of the target AP, and a pairwise master key (pairwise master key, PMK).

S950: The target AP sends a first handover request response message to the control AP.

After the target AP generates the PTK, if the target AP agrees on the handover, the target AP sends the first handover request response message to the control AP. The first handover request response message includes information such as the MAC address information of the STA, the MAC address information of the target AP, the Snonce of the STA, the random number Anonce of the target AP, and the PMK.

S960: The control AP sends the first handover request response message to the serving AP.

After receiving the first handover request response message sent by the target AP, the control AP sends the first handover request response message to the serving AP, to notify the serving AP that the target AP agrees on the handover.

S970: The serving AP sends a second handover request response message to the STA.

After receiving the first handover request response message sent by the control AP, the serving AP sends the second handover request response message to the STA.

The second handover request response message includes at least one piece of the following information: the MAC address information of the STA, the MAC address information of the target AP, the Snonce of the STA, the random number Anonce of the target AP, and the PMK

S980: The STA generates the second key.

The second key is the PTK. After the STA receives the second handover request response message sent by the serving AP, the STA obtains temporary key PTK information through negotiation based on the MAC address information of the STA, the MAC address information of the target AP, the Snonce of the STA, the random number Anonce of the target AP, and the pairwise master key (pairwise master key, PMK). In this case, both the STA and the target AP have the PTK for data encryption, that is, the handover succeeds. The STA can directly communicate with the target AP.

In the foregoing technical solution, when the STA performs AP handover, the STA performs key negotiation with the target AP, to design a new handover procedure in a BPAC scenario. This simplifies handover complexity and reduces a handover delay.

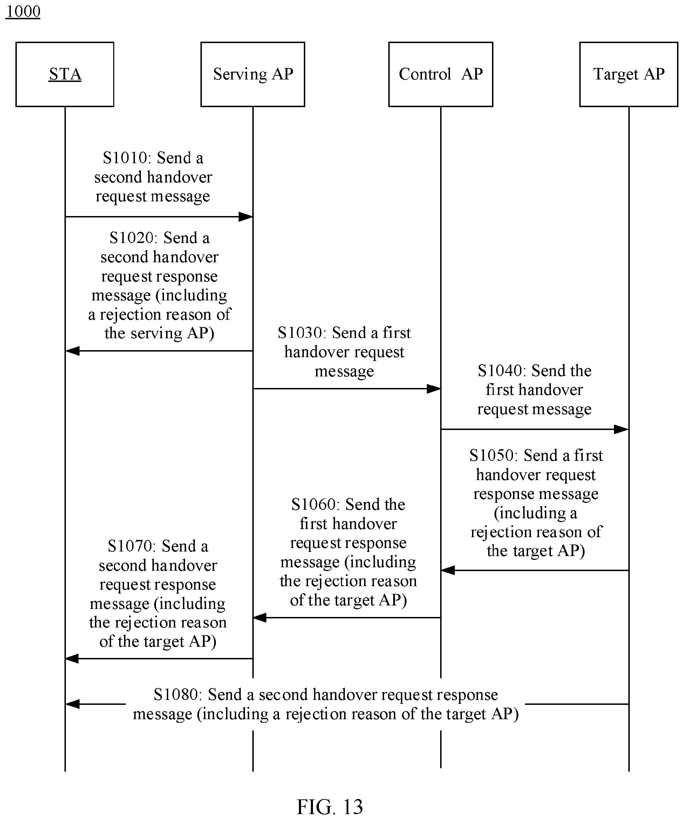

FIG. 13 is a schematic flowchart of another beam tracking handover according to an embodiment of this application. A method 1000 may be applied to the communications system 100 shown in FIG. 1. However, this embodiment of this application is not limited thereto.

S1010: A STA sends a second handover request message to a serving AP.

The second handover request message includes information used to generate a second key, and the second key is used to indicate the STA to perform data transmission with a target AP.

After receiving the second handover request message sent by the STA, if the serving AP does not agree on handover, step S1020 is performed.

S1020: The serving AP sends a second handover request response message to the STA.

The second handover request response message includes reason information about that the serving AP rejects a handover request. After receiving the second handover request response message including the rejection reason information, the STA may re-perform step S1010 after a period of time.

After the serving AP receives the second handover request message sent by the STA, if the serving AP agrees on the handover, the second handover request response message sent in S1020 includes information about that the serving AP agrees on the handover, and S1030 and S1040 continue to be performed.

S1030: The serving AP sends a first handover request message to a control AP.

S1040: The control AP sends the first handover request message to the target AP.

Steps S1030 to S1040 are the same as steps S920 and S930. For details, refer to the description of S920 and S930. Details are not described herein again.

After the target AP receives the first handover request message sent by the control AP, if the target AP does not agree on the handover, step S1050 is performed.

S1050: The target AP sends a first handover request response message to the control AP.

The first handover request response message includes reason information about that the target AP does not agree on the handover. For example, the target AP currently has no idle time period to perform handover, or the target AP does not support a service type requested by the STA.

S1060: The control AP sends the first handover request response message to the serving AP.

S1070: The serving AP sends a second handover request response message to the STA.

The second handover request response message includes reason information about that the target AP does not agree on the handover. After receiving the second handover request response message, the STA re-performs S1010 after a period of time, to request to hand over to a new target AP.

In the foregoing technical solution, a procedure in which a handover request is rejected in a handover process is described. This improves a procedure in a beam tracking handover phase in a BPAC scenario.

In some possible implementations, when the target AP rejects the handover, the target AP performs S1080. In other words, the target AP may directly send the second handover request response message to the STA. The second handover request response message includes reason information about that the target AP does not agree on the handover. After receiving the second handover request response message, the STA re-performs S1010 after a period of time, to request to hand over to a new target AP.

In this case, as shown in FIG. 13, S1050 to S1070 may not be performed, and S1080 may be directly performed. Therefore, a handover procedure is greatly simplified and a handover delay is reduced.

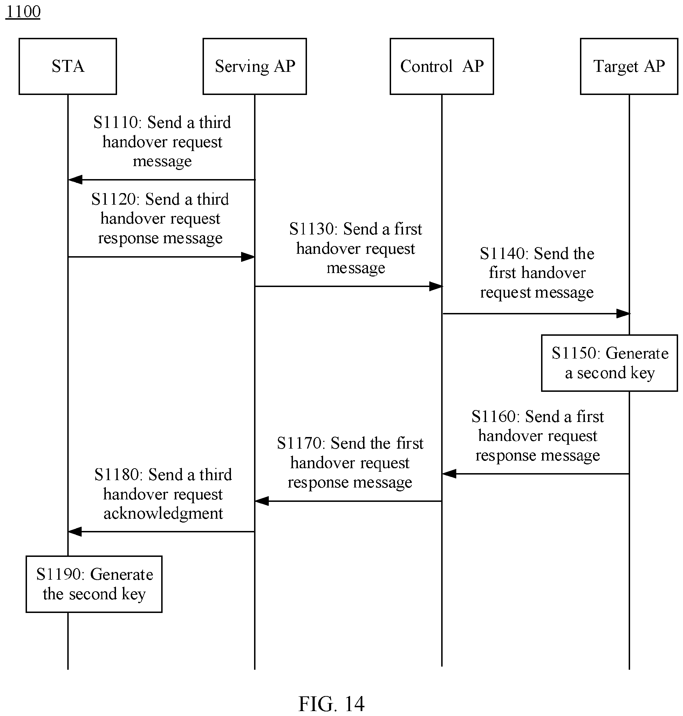

FIG. 14 is a schematic flowchart of still another beam tracking handover according to an embodiment of this application. A method 1100 may be applied to the communications system 100 shown in FIG. 1. However, this embodiment of this application is not limited thereto.

S1110: A STA sends a third handover request message to a serving AP.

When the serving AP of the STA sends the third handover request message to the STA due to a reason such as signal quality or load, to request the STA to hand over from the serving AP to a target AP.

The third handover request message includes information used to generate a second key. The second key may be a PTK.

Optionally, the third handover request message includes at least one piece of the following information: identification information of the target AP, RSNE information, and random number information of the STA.

S1120: The STA sends a third handover request response message to the serving AP.

If the STA agrees on the handover, the STA sends the third handover request response message to the serving AP.

S1130: The serving AP sends a first handover request message to a control AP.

When the serving AP receives the third handover request response message sent by the STA, the serving AP sends the first handover request message to the control AP.

Optionally, the first handover request message includes at least one piece of the following information: the identification information of the target AP, the RSNE information, and the random number information of the STA.

Optionally, in some possible implementations, if the control AP is the serving AP of the STA, S1130 may not be performed.

S1140: The control AP sends a first handover request message to the target AP.

After receiving the first handover request message sent by the serving AP of the STA, the control AP sends the first handover request message to the target AP.

S1150: The target AP generates the second key.

S1160: The target AP sends a first handover request response message to the control AP.

S1170: The control AP sends the first handover request response message to the serving AP.

S1180: The serving AP sends a third handover request acknowledgment to the STA.

S1190: The STA generates the second key.

Steps S1130 to S1190 are the same as steps S920 to S980. For details, refer to the description of S920 to S980. Details are not described herein again.

In the foregoing technical solution, when the serving AP of the STA initiates an AP handover request to the STA due to signal quality or load, the STA performs key negotiation with the target AP, to design a new handover procedure in a BPAC scenario. This simplifies handover complexity and reduces a handover delay.

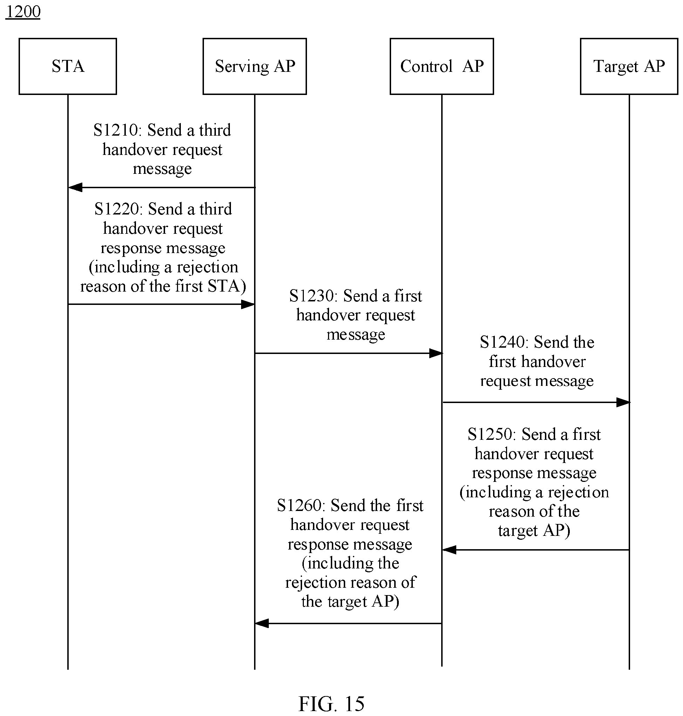

FIG. 15 is a schematic flowchart of yet another beam tracking handover according to an embodiment of this application. A method 1200 may be applied to the communications system 100 shown in FIG. 1. However, this embodiment of this application is not limited thereto.

S1210: A serving AP sends a third handover request message to a STA.

The third handover request message includes information used to generate a second key, and the second key is used to indicate the STA to perform data transmission with a target AP, for example, a PTK.

Optionally, the third handover request message includes at least one piece of the following information: identification information of the target AP, robust security network element (robust security network element, RSNE) information, and random number information of the STA.

After the STA receives the third handover request message sent by the serving AP of the STA, if the STA does not agree on the handover, step S1220 is performed.

S1220: The STA sends a third handover request response message to the serving AP.

The third handover request response message includes reason information about that the STA rejects a handover request. After receiving the third handover request response message including the rejection reason information, the serving AP may re-perform step S1210 after a period of time.

After the STA receives the third handover request message sent by the serving AP of the STA, if the STA agrees on the handover, the third handover request response message sent in S1220 includes information about that the STA agrees on the handover, and S1230 and S1240 continue to be performed.

S1230: The serving AP sends a first handover request message to a control AP.

S1240: The control AP sends the first handover request message to the target AP.

Steps S1230 to S1240 are the same as steps S920 and S930. For details, refer to the description of S920 and S930. Details are not described herein again.

After the target AP receives the first handover request message sent by the control AP, if the target AP does not agree on the handover, step S1250 is performed.

S1250: The target AP sends a first handover request response message to the control AP.

The first handover request response message includes reason information about that the target AP does not agree on the handover. For example, the target AP currently has no idle time period to perform handover, or the target AP does not support a service type requested by the STA.

S1260: The control AP sends the first handover request response message to the serving AP.

After receiving the first handover request response message, the serving AP of the STA re-performs S1210 after a period of time, to request to hand over to a new target AP.

In the foregoing technical solution, a procedure in which a handover request is rejected in a handover process is described. This improves a procedure in a beam tracking handover phase in a BPAC scenario.

In some possible implementations, when the target AP rejects the handover, if the serving AP of the STA still does not receive a handover acknowledgment when the serving AP of the STA expires, the serving AP re-performs S1210 after a period of time, to request to hand over to the new target AP.

In this case, S1250 to S1260 may not be performed. This greatly simplifies a handover procedure and reduces a handover delay.

It should be understood that sequence numbers of the foregoing processes do not indicate an execution sequence. The execution sequence of the processes should be determined based on functions and internal logic of the processes, and should not be construed as any limitation on an implementation process of this embodiment of this application.

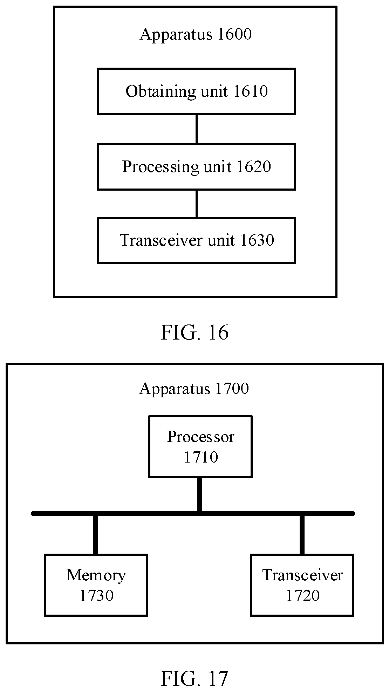

The foregoing describes in detail the beam tracking method according to the embodiments of this application with reference to FIG. 1 to FIG. 15. The following describes in detail a beam tracking apparatus according to the embodiments of this application with reference to FIG. 16 and FIG. 17.

FIG. 16 shows a beam tracking apparatus 1600 according to an embodiment of this application. The apparatus 1600 includes an obtaining unit 1610, a processing unit 1620, and a transceiver unit 1630.

In a possible design, the apparatus 1600 is configured to implement procedures and steps corresponding to the station STA in the foregoing method embodiments.

The obtaining unit 1610 is configured to obtain first information. The first information includes period information of beam tracking performed by a STA with each of a plurality of access points APs.

The processing unit 1620 is configured to perform beam tracking with the plurality of APs based on the first information.

Optionally, the plurality of APs include a control AP, and the control AP can communicate with each of the plurality of APs. The obtaining unit 1610 is specifically configured to obtain the first information from the control AP.

Optionally, the first information is obtained by the control AP by polling an idle time period of each of the plurality of APs.

Optionally, the first information is determined by the control AP based on a reserved time interval RTI of each of the plurality of APs.

Optionally, the first information is determined by the control AP based on a measurement report of beam training performed by the STA with each of the plurality of APs.

Optionally, the processing unit 1620 is further configured to separately perform beam tracking with a corresponding AP within a beam tracking period of each of the plurality of APs.

Optionally, the processing unit 1620 is specifically configured to feed back beam tracking results to the plurality of APs by using the control AP within a feedback period.

In another possible design, the apparatus 1600 is configured to implement procedures and steps corresponding to the control AP in the foregoing method embodiments.

The obtaining unit 1610 is configured to obtain first information. The first information includes period information of beam tracking performed by a station STA with each of a plurality of APs.

The transceiver unit 1630 is configured to send the first information.

Optionally, the obtaining unit 1610 is specifically configured to obtain the first information by polling an idle time period of each of the plurality of APs.

Optionally, the transceiver unit 1630 is specifically configured to receive a beam tracking request message sent by the STA.

Optionally, the transceiver unit 1630 is specifically configured to send the beam tracking request message to each of the plurality of APs.

Optionally, the transceiver unit 1630 is specifically configured to receive a beam tracking request response message sent by each of the plurality of APs. The beam tracking request response message includes the idle time period of each of the plurality of APs.

Optionally, the processing unit 1620 is specifically configured to determine the first information based on the idle time period of each of the plurality of APs.

Optionally, the obtaining unit 1610 is specifically configured to obtain a reserved time interval RTI of each of the plurality of APs.

Optionally, the processing unit 1620 is specifically configured to determine the first information based on the RTI of each of the plurality of APs.

Optionally, the obtaining unit 1610 is specifically configured to obtain a measurement report of beam training performed by the STA with each of the plurality of APs.

Optionally, the processing unit 1620 is specifically configured to determine the first information based on the measurement report.

Optionally, the transceiver unit 1630 is further configured to send second information to each of the plurality of APs. The second information includes period information of beam tracking performed by the STA with each of the plurality of APs.

Optionally, the processing unit 1620 is further configured to feed back a result of beam tracking with the plurality of APs to the STA within a feedback period.

In the foregoing technical solution, when communications quality of a link between the STA and a current serving AP is degraded because the STA moves, the STA needs to determine a new AP by using the beam tracking, and hand over from the current serving AP to the new AP, to ensure the communications quality. In a BPAC scenario, when a STA performs beam tracking with a plurality of APs, uncoordinated beams likely cause interference. Therefore, when performing beam tracking, the STA obtains first information, and sequentially performs beam tracking with the plurality of APs based on the first information, to avoid interference.

It should be understood that, the apparatus 1600 herein is represented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that the apparatus 1600 may be specifically the station or control access point in the foregoing embodiments, and the apparatus 1600 may be configured to perform procedures and/or steps corresponding to the station or control access point in the foregoing method embodiments. To avoid repetition, details are not described herein again.

The apparatus 1600 in the foregoing solutions has a function of implementing a corresponding step performed by the station or control access point in the foregoing method. The function may be implemented by hardware, or may be implemented by hardware by executing corresponding software. The hardware or the software includes one or more modules corresponding to the foregoing function. For example, the sending unit may be replaced with a transmitter, the receiving unit may be replaced with a receiver, and other units such as the processing unit and the obtaining unit may be replaced with a processor, to respectively perform a sending operation, a receiving operation, and a related processing operation in the method embodiments.

In this embodiment of this application, the apparatus in FIG. 16 may be the station or control access point in the foregoing embodiments, or may be a chip or a chip system, for example, a system on chip (system on chip, SoC). Correspondingly, the receiving unit and the sending unit may be a transceiver circuit of the chip. This is not limited herein.

FIG. 17 shows a beam tracking apparatus 1700 according to an embodiment of this application. The apparatus 1700 includes a processor 1710 and a transceiver 1720. The processor 1710 and the transceiver 1720 communicate with each other through an internal connection path, and the processor 1710 is configured to execute instructions, to control the transceiver 1720 to send a signal and/or receive a signal.

Optionally, the apparatus 1700 may further include a memory 1730. The memory 1730 communicates with the processor 1710 and the transceiver 1720 through an internal connection path. The memory 1730 is configured to store instructions, and the processor 1710 may execute the instructions stored in the memory 1730.

In a possible design, the apparatus 1700 is configured to implement procedures and steps corresponding to the station STA in the foregoing method embodiments.

The processor 1710 is configured to: obtain first information, where the first information includes period information of beam tracking performed by the STA with each of a plurality of access points APs; and perform beam tracking with the plurality of APs based on the obtained first information.

In another possible design, the apparatus 1700 is configured to implement procedures and steps corresponding to the control access point in the foregoing method embodiments.

The processor 1710 is configured to obtain first information. The first information includes period information of beam tracking performed by a station STA with each of a plurality of APs. The transceiver 1720 is configured to send the first information to the STA.

It should be understood that the apparatus 1700 may specifically be the station or control access point in the foregoing embodiments, or may be a chip or a chip system. Correspondingly, the transceiver 1720 may be a transceiver circuit of the chip. This is not limited herein. Specifically, the apparatus 1700 may be configured to perform the steps and/or the procedures corresponding to the station or control access point in the foregoing method embodiments. Optionally, the memory 1730 may include a read-only memory and a random access memory, and provide instructions and data for the processor. A part of the memory may further include a non-volatile random access memory. For example, the memory may further store information about a device type. The processor 1710 may be configured to execute the instructions stored in the memory. In addition, when the processor 1710 executes the instructions stored in the memory, the processor 1710 is configured to perform the steps and/or the procedures corresponding to the station or control access point in the foregoing method embodiments.

It should be understood that in this embodiment of this application, the processor of the foregoing apparatus may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing method may be implemented by using a hardware integrated logic circuit in the processor or by using instructions in a form of software. The steps of the method disclosed with reference to the embodiments of this application may be directly performed by a hardware processor, or may be performed by using a combination of hardware in the processor and a software unit. The software unit may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps of the foregoing method in combination with the hardware of the processor. To avoid repetition, details are not described herein again.

In this application, "at least one" refers to one or more, and "a plurality of' refers to two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one (piece) of a, b, or c may indicate the following cases: a, b, c, a and b, a and c, b and c, or a, b, and c, where a, b, and c may be singular or plural.

A person of ordinary skill in the art may be aware that, in combination with the examples described in the embodiments disclosed in this specification, method steps and units can be implemented by electronic hardware, computer software, or a combination thereof. To clearly describe the interchangeability between the hardware and the software, the foregoing has generally described steps and composition of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for ease brevity of description, for a detailed working process of the foregoing system, apparatus, and unit, refer to a corresponding process in the foregoing method embodiments, and details are not repeatedly described herein.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions in the embodiments of this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A beam tracking method, comprising:
obtaining, by a station STA, first information, wherein the first information comprises period information of beam tracking performed by the STA with each of a plurality of access points APs; and
performing, by the STA, beam tracking with the plurality of APs based on the first information.

2. The method according to claim 1, wherein the plurality of APs comprise a control AP, the control AP is capable of communicating with each of the plurality of APs, and the obtaining, by a STA, first information comprises:
obtaining, by the STA, the first information from the control AP.

3. The method according to claim 2, wherein the first information is obtained by the control AP by polling an idle time period of each of the plurality of APs.

4. The method according to claim 2, wherein the first information is determined by the control AP based on a reserved time interval RTI of each of the plurality of APs.

5. The method according to claim 2, wherein the first information is determined by the control AP based on a measurement report of beam training performed by the STA with each of the plurality of APs.

6. The method according to any one of claims 1 to 5, wherein the performing, by the STA, beam tracking with the plurality of APs based on the first information comprises:
separately performing, by the STA, beam tracking with a corresponding AP within a beam tracking period of each of the plurality of APs.

7. The method according to any one of claims 2 to 5, wherein the performing, by the STA, beam tracking with the plurality of APs based on the first information comprises:
feeding back, by the STA by using the control AP within a feedback period, results of beam tracking with the plurality of APs.

8. A beam tracking method, comprising:
obtaining, by a control access point AP, first information, wherein the first information comprises period information of beam tracking performed by a station STA with each of a plurality of APs; and
sending, by the control AP, the first information.

9. The method according to claim 8, wherein the obtaining, by a control AP, first information comprises:
obtaining, by the control AP, the first information by polling an idle time period of each of the plurality of APs.

10. The method according to claim 9, wherein the obtaining, by the control AP, the first information by polling an idle time period of each of the plurality of APs comprises:
receiving, by the control AP, a beam tracking request message sent by the STA;
sending, by the control AP, the beam tracking request message to each of the plurality of APs;
receiving, by the control AP, a beam tracking request response message sent by each of the plurality of APs, wherein the beam tracking request response message comprises the idle time period of each of the plurality of APs; and
determining, by the control AP, the first information based on the idle time period of each of the plurality of APs.

11. The method according to claim 8, wherein the obtaining, by a control AP, first information comprises:
obtaining, by the control AP, a reserved time interval RTI of each of the plurality of APs; and
determining, by the control AP, the first information based on the RTI of each of the plurality of APs.

12. The method according to claim 8, wherein the obtaining, by a control AP, first information comprises:
obtaining, by the control AP, a measurement report of beam training performed by the STA with each of the plurality of APs; and
determining, by the control AP, the first information based on the measurement report.

13. The method according to any one of claims 8 to 12, wherein the method further comprises:
sending, by the control AP, second information to each of the plurality of APs, wherein the second information comprises period information of beam tracking performed by the STA with each of the plurality of APs.

14. The method according to any one of claims 8 to 13, wherein the method further comprises:
feeding back, by the control AP, a result of beam tracking with the plurality of APs to the STA within a feedback period.

15. A beam tracking apparatus, wherein the beam tracking apparatus is configured to perform the method according to any one of claims 1 to 7.

16. A beam tracking apparatus, wherein the beam tracking apparatus is configured to perform the method according to any one of claims 8 to 14.

17. An apparatus, wherein the apparatus comprises a processor configured to read instructions, and when the processor executes the instructions, the apparatus is enabled to perform the method according to any one of claims 1 to 14.

18. The apparatus according to claim 17, wherein the apparatus further comprises a memory, the memory is coupled to the processor, and the memory is configured to store the instructions.

19. A computer-readable medium, configured to store a computer program, wherein the computer program comprises instructions used to implement the method according to any one of claims 1 to 14.

20. A computer program product, wherein the computer program product comprises computer program code, and when the computer program code is run on a computer, the computer is enabled to implement the method according to any one of claims 1 to 14.
